# EUROPEAN PATENT SPECIFICATION

(11) **EP 1 402 662 B1**
(45) Date of publication and mention of the grant of the patent: **10.11.2004**
(21) Application number: 02745806.6
(22) Date of filing: 26.06.2002
(51) Int. Cl.: H04B 10/10, H04B 10/00

(54) **OPTICAL CONNECTION SYSTEM**
OPTISCHES VERBINDERSYSTEM
SYSTEME DE CONNEXION OPTIQUE

(43) Date of publication of application: 31.03.2004
(73) Proprietor: Fidia S.p.A., 10099 San Mauro Torinese (IT)
(72) Inventor: MORFINO, Giuseppe, I-10025 Pino Torinese (IT); VESCO, Mario, c/o FIDIA S.P.A., I-10099 San Mauro Torinese (IT)
(74) Representative: Garavelli, Paolo
(86) International application number: PCT/IT2002/000423
(87) International publication number: WO 2004/004169

(56) References cited:
- WO-A-01/78265
- US-A- 5 495 357
- PATENT ABSTRACTS OF JAPAN vol. 1998, no. 07, 31 March 1998 (1998-03-31) & JP 08 314831 A (INTERNATL BUSINESS MACH CORP <IBM>), 29 November 1996 (1996-11-29)

## Description

The present invention refers to an optically-connected system, in particular through optical rays with infrared frequency, for exchanging data among industrial automation devices.

Currently (see for example WO-A-01-78265 and US-A-5.495.357), in industrial automation applications, it is common to realise a plurality of connection elements (that contain input and output lines towards external devices such as sensors, etc.) placed one beside the other (for example on a DIN-type bar) and mutually connected and connected to a data collecting and ordering element (commonly known as "power terminal"), which, in turn, through a field bus, sends data, collected from different external devices, to an upstream numeric control. In order to realise the data exchange between connection elements and data collecting and ordering element, a serial connection is commonly provided that allows both the passage of different data, and the supply of various elements. The connection and data collecting and ordering elements are each contained inside a respective box, having various shapes and sizes, adapted to be assembled on bars or operatively installed in another way.

A system built in this way has many problems: first of all, when one of the connection elements fails, in some cases it is necessary to disassemble the whole row of elements, since such element cannot be individually removed; in other cases, if it is possible to remove the element shaped as a card from the box that contains it, its removal stops the serial connection line and therefore, if one has not a connection element to immediately replace it, such line is interrupted and then deactivated, with obvious disadvantages.

Moreover, the boxes containing the various elements are very often of a complicated configuration and therefore are of a very high cost for stamping them. Where the boxes are simpler as configuration, they are lacking many functionalities that current automations require.

Other problems of the above system are the presence of "physical" contacts that the various elements have in order to be mutually connected: such contacts are subjected to wear, dirt and other environmental conditions, such as for example electromagnetic disturbances, that damage their functionality, in turn damaging the other system connection elements.

Still more, the supply that it is possible to provide through the serial connection is relatively limited, allowing to mutually connect a maximum number of elements that is equal to 8 or 16 digital outputs each one at 250 mA. If the necessary connection elements are greater than this number, it is necessary to provide for a further system, serially connected to the previous one, with obvious problems of cost and connections.

Object of the present invention is solving the above prior-art problems by providing an optically-connected system that is simple to be realised, install, use and subject to maintenance, is of a reduced cost from the points of view both of manufacturing, and of use, and above all is much more efficient and reliable with respect to connections currently present on the market.

Another object of the present invention is providing an optically-connected system that allows quickly replacing faulty or unusable elements, that can moreover do without some elements in the series without anyway compromising the data exchange capability among the elements being present, and that is insensitive to electromagnetic disturbances on the lines, that are a frequent cause of errors in current connections. With an arrangement of this type, it is possible to group the various elements composing the series by families of use, simplifying and increasing the safety for maintenance people involved.

A further object of the present invention is providing an optically-connected system as mentioned above that is scarcely sensitive to influences from the surrounding environment, such as for example dirt, noises, vibrations, etc.

The above and other objects and advantages of the invention, as will appear from the following description, are obtained by an optically-connected system as claimed in Claim 1. Preferred embodiments and non-trivial variations of the present invention are claimed in the dependent Claims.

The present invention will be better described by some preferred embodiments thereof, given as a non-limiting example, with reference to the enclosed drawings, in which:
- Figure 1 is a schematic block view of a configuration of industrial automation elements to which the optically-connected system of the present invention can be applied;
- Figure 2 is a schematic perspective view of an industrial automation box that can be used with the present invention;
- Figure 3 is a bottom view of the box in Fig. 2;
- Figure 4 is a schematic side view of a plate that points out the optically-connected system of the invention applied thereto;
- Figure 5 is a front view of the plate in Fig. 4;
- Figure 6 is a schematic operating view of the optically-connected system of the invention; and
- Figure 7 is a schematic block diagram of the main components necessary for implementing the optically-connected system of the present invention.

With reference to the Figures, non-limiting examples of embodiments of the optically-connected system of the present invention are shown. The device will be described hereinbelow by applying it to the field of industrial automation in general, but it is evident that it can find a valid and efficient application to any field in which it is necessary to perform an efficient data exchange between mutually connectable devices that are preferably adjacent and use a supply and data exchange bus.

A first preferred embodiment of the present invention (shown in the drawings only in a general form) provides for an optically-connected system for exchanging data among industrial automation devices, composed of a plurality of connection elements 7, 9', 9'', ..., 9^{N}. Each one of such connection elements 7, 9', 9'', ..., 9^{N} is equipped with one pair of optical transmitting 30, 32 and receiving 28, 34 means: such pair is composed of one optical transmitting means 30, 32 placed on the main side 10 of each one of the connection elements 7, 9', 9'', ..., 9^{N} and of one optical receiving means 28, 34 placed on an opposed main side 12 of each one of the connection elements 7, 9', 9'', ..., 9^{N}. Moreover, each one of the transmitting 30, 32 and receiving 28, 34 means is adapted to cooperate for exchanging data with a respective receiving 28, 34 and transmitting 30, 32 means of another adjacent of the connection elements 7, 9', 9'', ..., 9^{N}.

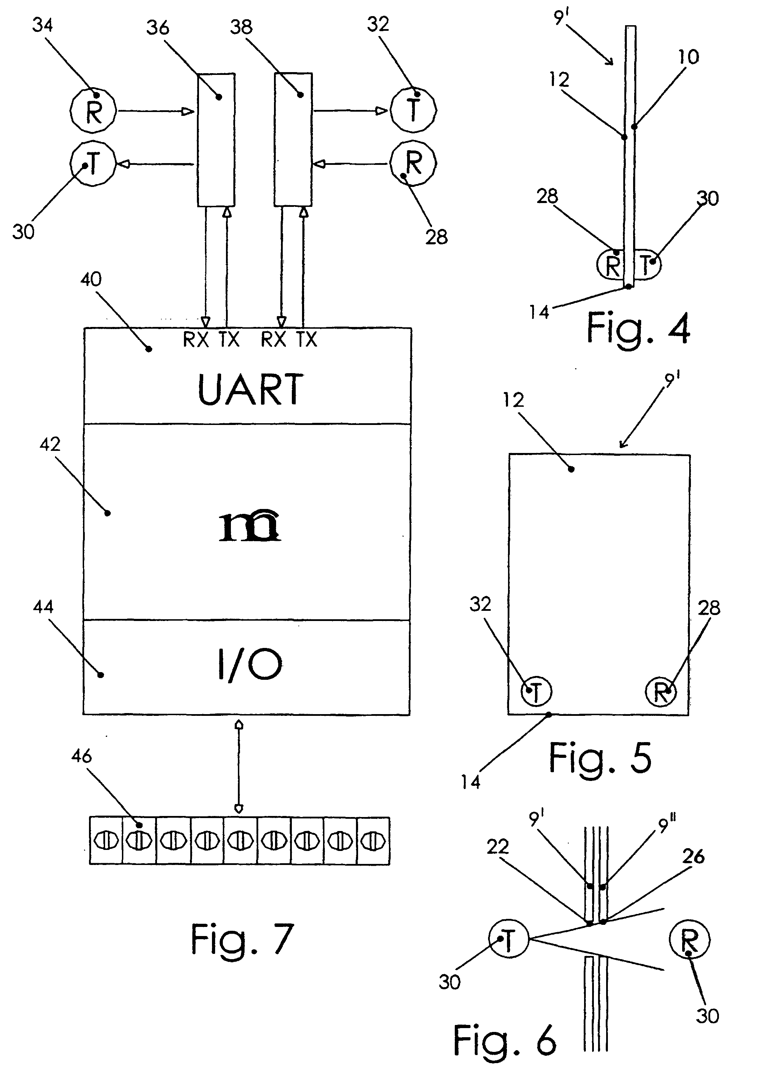

According to another preferred embodiment shown in the Figures, the optically-connected system for exchanging data among industrial automation devices of the present invention also substantially comprises a plurality of connection elements 7, 9', 9'', ..., 9^{N}, each one of said which is equipped with at least two pairs of optical transmitting 30, 32 and receiving 28, 34 means. Each pair is composed of one optical transmitting means 30, 32 placed on the main side 10 of each one of the connection elements 7, 9', 9'', ..., 9^{N} and of one optical receiving means 28, 34 placed on an opposed main side 12 of each one of the connection elements 7, 9', 9'', ..., 9^{N}; moreover, in order to always guarantee the operating functionality of the connection elements 7, 9', 9'', ..., 9^{N} independently from the orientation with which they are assembled (form example on a DIN-type bar), each pair of optical transmitting 30, 32 and receiving 28, 34 means is further placed on the main sides 10, 12 of the connection elements 7, 9' , 9'', ..., 9^{N} in an opposite way with respect to the previous pair in such a way as to place on each main side 10, 12 of the connection elements 7, 9', 9'', ..., 9^{N} one transmitting means 30, 32 followed by one receiving means 28, 34 (as can be better seen in Fig. 5), eventually followed by one transmitting means 30, 32 (not shown) and so on. Also in this case, each one of the transmitting 30, 32 and receiving 28, 34 means is adapted to cooperate for exchanging data with a respective receiving 28, 34 and transmitting 30, 32 means of another adjacent of the connection elements 7, 9', 9'', ..., 9^{N}.

In order to allow installation and connection of a higher number of connection elements 7, 9', 9'', ..., 9^{N}, according to application requirements, at least one of the connection elements 7, 9', 9'', ..., 9^{N} can further be equipped, on one of its minor sides 14 perpendicular to the sides 10, 12 on which the transmitting 30, 32 and receiving 28, 34 means are placed, with at least one further pair of transmitting 30, 32 and receiving 28, 34 means (not shown). In this case, two adjacent rows of connection elements 7, 9', 9'', ..., 9^{N}; can be installed and data are transmitted and received not only along the two rows, but also between one row and the other, with an optical "perpendicular" connection between an element of a row and the corresponding element below in the other row.

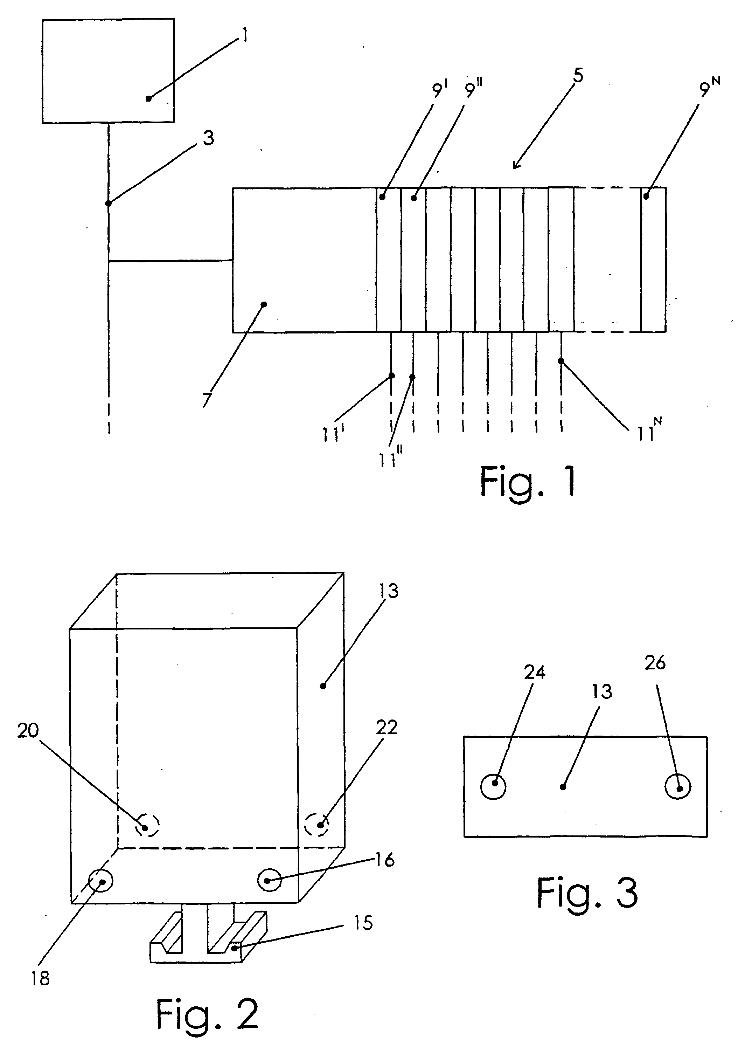

As known, the connection elements 7, 9', 9'', ..., 9^{N} are placed inside respective boxes 13 for industrial automation: in order to allow their use with the present invention, however, it is not necessary that such boxes 13 are of a particularly complicated and costly shape or configuration; instead, boxes 13 are chosen that are as inexpensive as possible. The boxes 13, like the one schematically shown in Fig. 2, are equipped with means 15 for the connection to bars (for example of the DIN type). In order to be able to use such boxes 13 with the present invention, it is enough to drill, in each one of them, holes 16, 18, 20, 22 obtained next to the transmitting 30, 32 and receiving 28, 34 means in order to allow their mutual operability. Obviously, the boxes 13 for the connection elements 7, 9', 9'', ..., 9^{N} adapted to also perform the "perpendicular" connection, will also have holes 24, 26 obtained next to the further pair of transmitting 30, 32 and receiving 28, 34 means being present on the side 14.

Preferably, the optical transmitting 30, 32 and receiving 28, 34 means are composed of transmitters and receivers of optical rays at infrared frequency, particularly, but not in a limiting way, operating according to the IrDa protocol.

With this type of optical components, an operating circuit can be realised, schematically shown in Fig. 7, which provides that each pair of transmitters 30, 32 and receivers 28, 34 is connected to a respective encoder/decoder 36, 38 in turn connected to control and management means 40, 42 (commonly a UART-type of card 40 and a microprocessor 42). Such control and management means 40, 42 are connected, through an I/O interface 44, to a terminal board 46 for supply and signal input/output from external industrial automation devices (not shown).

Alternatively, obviously, the optical transmitting 30, 32 and receiving 28, 34 means can be composed of transmitters and receivers of optical rays with laser rays, at microwave frequency, or other types of equivalent optical means, and even using visible light.

In order to complete the operating connections of the system of the invention, the supply to each one of the connection elements 7, 9', 9'', ..., 9^{N} can be provided separately with respect to the optically-connected system, for example by serial connections through small cables, or using detachable connection terminal boards, in order to facilitate supply disconnection and reconnection operations when replacing or maintaining the connection elements 7, 9', 9'', ..., 9^{N} and/or the boxes 13.

Further in a known way, as shown in Fig. 1, the connection elements 7, 9', 9'', ..., 9^{N} are composed of a plurality of data input and output elements 9', 9", ..., 9^{N} respectively connected (through digital inputs or outputs 11', 11", ..., 11^{N} that can be 2, 4, 8 and like numbers) to external industrial automation devices (not shown) and of a data collecting and queuing element 7 ("power terminal") operatively connected to the data input and output elements 9', 9'', ..., 9^{N}: such element 7 is connected, through a field bus 3, to an upstream numeric control 1 for managing data.

With the above-described system it is therefore possible to obtain the following advantages:
1. If a module 9', 9'', ..., 9^{N} is removed, the system goes on operating.
2. If due to a connection error, during the installation phase, high voltage is provided to a module 9', 9'', ..., 9^{N}, this one is damaged, but the other ones, being galvanically insulated, remain operating.
3. Not having the constraint of arranging the modules 9', 9'', ..., 9^{N} one beside the other, they can be separated in order to divide them logically depending on the type of treated signals or their functionality, with following simplifications for maintenance personnel and responsible operators.

## Claims

1. Optically-connected system for exchanging data among industrial automation devices comprising a plurality of connection elements (7, 9', 9'', ..., 9^{N}), **characterised in that** each one of said connection elements (7, 9', 9'', ..., 9^{N}) being equipped with at least two pairs of optical transmitting (30, 32) and receiving (28, 34) means, each pair being composed of one optical transmitting means (30, 32) placed on a main side (10) of each one of said connection elements (7, 9', 9'', ..., 9^{N}) and of one optical receiving means (28, 34) placed on an opposed main side (12) of each one of said connection elements (7, 9', 9'', ..., 9^{N}), each pair of optical transmitting (30, 32) and receiving (28, 34) means being further placed on said main sides (10, 12) of said connection elements (7, 9', 9'', ..., 9^{N}) in an opposite way with respect to the previous pair in such a way as to place on each main side (10, 12) of said connection elements (7, 9' , 9'', ..., 9^{N}) one transmitting means (30, 32) followed by one receiving means (28, 34) optionally followed by one transmitting means (30, 32) and so on, each one of said transmitting (30, 32) and receiving (28, 34) means being adapted to cooperate for exchanging data with a respective receiving (28, 34) and transmitting (30, 32) means of another adjacent of said connection elements (7, 9', 9'', ..., 9^{N}).

2. Optically-connected system according to Claim 1, **characterised in that** at least one of said connection elements (7, 9', 9'', ..., 9^{N}) is equipped on one of its minor sides (14) perpendicular to the sides (10, 12) on which the transmitting (30, 32) and receiving (28, 34) means are placed, with at least one further pair of transmitting (30, 32) and receiving (28, 34) means.

3. Optically-connected system according to Claim 1, **characterised in that** said connection elements (7, 9', 9'', ..., 9^{N}) are placed inside respective boxes (13) for industrial automation, each one of said boxes (13) being equipped with holes (16, 18, 20, 22) obtained next to said transmitting (30, 32) and receiving (28, 34) means in order to allow their mutual operability.

4. Optically-connected system according to Claim 2, **characterised in that** said connection elements (7, 9', 9'', ..., 9^{N}) are placed inside respective boxes (13) for industrial automation, each one of said boxes (13) being equipped with holes (16, 18, 20, 22) obtained next to said transmitting (30, 32) and receiving (28, 34) means in order to allow their mutual operability and with holes (24, 26) obtained next to said at least one further pair of transmitting (30, 32) and receiving (28, 34) means in order to allow their operability.

5. Optically-connected system according to Claim 1, **characterised in that** said optical transmitting (30, 32) and receiving (28, 34) means are composed of transmitters and receivers of optical rays at infrared frequency.

6. Optically-connected system according to Claim 5, **characterised in that** said transmitters and receivers of optical rays at infrared frequency operate according to the IrDa protocol.

7. Optically-connected system according to Claim 5 or 6, **characterised in that** each pair of said transmitters (30, 32) and receivers (28, 34) is connected to a respective encoder/decoder (36, 38) in turn connected to control and management means (40, 42), said control and management means (40, 42) being connected, through an I/O interface (44), to a terminal board (46) for supply and signal input/output from external industrial automation devices.

8. Optically-connected system according to Claim 7, **characterised in that** said control and management means (40, 42) are composed of a UART-type element (40) and a microprocessor (42).

9. Optically-connected system according to Claim 1, **characterised in that** said optical transmitting (30, 32) and receiving (28, 34) means are composed of transmitters and receivers of optical rays with laser rays.

10. Optically-connected system according to Claim 1, **characterised in that** said optical transmitting (30, 32) and receiving (28, 34) means are composed of transmitters and receivers of optical rays on a microwave frequency or through visible light.

11. Optically-connected system according to Claim 1, **characterised in that** a supply to each one of said connection elements (7, 9', 9'', ..., 9^{N}) is provided separately with respect to said optically-connected system.

12. Optically-connected system according to Claim 11, **characterised in that** the supply is provided by serial connections through small cables.

13. Optically-connected system according to Claim 11, **characterised in that** the supply is provided by detachable connection terminal boards.

14. Optically-connected system according to Claim 1, **characterised in that** said connection elements (7, 9', 9'', ..., 9^{N}) are composed of a plurality of additional data input and output elements (9', 9'', ..., 9^{N}) respectively connected (11', 11'', ..., 11^{N}) to industrial automation devices and of a data collecting and queuing element (7) operatively connected to said data input and output elements (9', 9'', ..., 9^{N}), said data collecting and quening element (7) being connected, through a field bus (3), to a numeric control (1) for managing data.

## Patentansprüche

1. Optisches Verbindungssystem für den Datenaustausch zwischen industriellen Automatisierungsvorrichtungen, das mehrere Verbindungsmittel (7, 9', 9", ..., 9^{N}) enthält, charakterisiert durch die Tatsache, dass jedes der besagten Verbindungsmittel (7, 9', 9", ..., 9^{N}) mit wenigstens zwei Paaren optischen Übertragungsmitteln (30, 32) und Empfangsmitteln (28, 34) ausgestattet ist, wobei jedes Paar aus einem optischen Übertragungsmittel (30, 32) besteht, das sich auf einer Hauptseite (10) eines jeden der besagten Verbindungsmittel (7, 9', 9'', ..., 9^{N}) befindet, und aus einem optischen Empfangsmittel (28, 34), das sich auf der Hauptseite (12) gegenüber einem jeden der besagten Verbindungsmittel (7, 9', 9", ..., 9^{N}) befindet. Für jedes Paar der optischen Übertragungsmittel (30, 32) und Empfangsmittel (28, 34) ist auf den besagten Hauptseiten (10, 12) der besagten Verbindungsmittel (7, 9', 9", ..., 9^{N}) entgegengesetzt zum vorherigen Paar (10, 12) der besagten Verbindungsmittel (7, 9', 9", ..., 9^{N}) ein Übertragungsmittel (30, 32) vorgesehen, dem ein Empfangsmittel (28, 34) folgt, mit einem Übertragungsmittel (30, 32) als Option danach und so weiter, wobei jedes der besagten Übertragungsmittel (30, 32) und Empfangsmittel (28, 34) für den Datenaustausch mit dem betreffenden Empfangsmittel (28, 34) und Übertragungsmittel (30, 32) eines anderen nahe liegenden Verbindungsmittel (7, 9', 9", ..., 9^{N}) kooperiert.

2. Optisches Verbindungssystem laut Beanspruchung 1, charakterisiert durch die Tatsache, dass eines der besagten Verbindungsmittel (7, 9', 9", ..., 9^{N}) auf seiner kleineren Seite (14), rechtwinklig zu den Seiten (10, 12), auf denen sich die Übertragungsmittel (30, 32) und Empfangsmittel (28, 34) befinden, mit wenigstens einem weiteren Paar Übertragungsmittel (30, 32) und Empfangsmittel (28, 34) ausgestattet ist.

3. Optisches Verbindungssystem laut Beanspruchung 1, charakterisiert durch die Tatsache, dass die besagten Verbindungsmittel (7, 9', 9", ..., 9^{N}) sich im Inneren der betreffenden Gehäuse (13) für industrielle Automatisierung befinden, und dass jedes der besagten Gehäuse mit Löchern (16, 18, 20, 22) für die Übertragungsmittel (30, 32) und Empfangsmittel (28, 34) versehen ist, um die gegenseitige Arbeitsfähigkeit zu ermöglichen

4. Optisches Verbindungssystem gemäß Beanspruchung 2, charakterisiert durch die Tatsache, dass die besagten Verbindungsmittel (7, 9', 9", ..., 9^{N}) sich im Inneren der betreffenden Gehäuse (13) für industrielle Automatisierung befinden, und dass jedes der besagten Gehäuse mit Löchern (16, 18, 20, 22) für die Übertragungsmittel (30, 32) und Empfangsmittel (28, 34) versehen ist, um die gegenseitige Arbeitsfähigkeit zu ermöglichen und mit Löchern (24, 26) für das besagte wenigstens eine Paar weiterer Übertragungsmittel (30, 32) und Empfangsmittel (28, 34), um die gegenseitige Arbeitsfähigkeit zu ermöglichen.

5. Optisches Verbindungssystem gemäß Beanspruchung 1, charakterisiert durch die Tatsache, dass die optischen Übertragungsmittel (30, 32) und Empfangsmittel (28, 34) aus Übertragern und Empfängern von optischen Strahlen auf Infrarotfrequenz bestehen.

6. Optisches Verbindungssystem gemäß Beanspruchung 5, charakterisiert durch die Tatsache, dass die besagten Übertrager und Empfänger mit optischen Strahlen auf Infrarotfrequenz mit dem Protokoll IrDa arbeiten.

7. Optisches Verbindungssystem gemäß Beanspruchung 5 oder 6, charakterisiert durch die Tatsache, dass jedes Paar der besagten Übertrager (30, 32) und Empfänger (28, 34) mit einem betreffenden Kodierer/Entkodierer (36, 38) verbunden ist, der seinerseits mit Kontroll- und Verwaltungsmitteln (40, 42) angeschlossen ist, wobei diese Kontroll- und Verwaltungsmittel (40, 42) durch I/O-Schnittstelle (44) mit einem Klemmenbrett (46) für die Versorgung und den Ein/Ausgang der Signale von den externen Vorrichtungen der industriellen Automatisierung verbunden sind.

8. Optisches Verbindungssystem gemäß Beanspruchung 7, charakterisiert durch die Tatsache, dass die besagten Kontroll- und Verwaltungsmittel (40, 42) aus einem Element Typ UART (40) und einem Mikroprozessor (42) bestehen.

9. Optisches Verbindungssystem gemäß Beanspruchung 1, charakterisiert durch die Tatsache, dass die optischen Übertragungsmittel (30, 32) und Empfangsmittel (28, 34) aus Übertragern und Empfängern mit optischen Laserstrahlen bestehen.

10. Optisches Verbindungssystem gemäß Beanspruchung 1, charakterisiert durch die Tatsache, dass die optischen Übertragungsmittel (30, 32) und Empfangsmittel (28, 34) aus Übertragern und Empfängern mit optischen Strahlen auf Mikrowellenfrequenz oder durch sichtbares Licht bestehen.

11. Optisches Verbindungssystem gemäß Beanspruchung 1, charakterisiert durch die Tatsache, dass die Versorgung der besagten Verbindungsmittel (7, 9', 9", ..., 9^{N}) getrennt vom besagten optischen Verbindungssystem erfolgt.

12. Optisches Verbindungssystem gemäß Beanspruchung 11, charakterisiert durch die Tatsache, dass die Einspeisung durch in Reihe angeschlossene Kabel erfolgt.

13. Optisches Verbindungssystem gemäß Beanspruchung 11, charakterisiert durch die Tatsache, dass die Einspeisung durch abnehmbare Verbindungsklemmenbretter erfolgt.

14. Optisches Verbindungssystem gemäß Beanspruchung 1, charakterisiert durch die Tatsache, dass die besagten Verbindungsmittel (7, 9', 9", ..., 9^{N}) aus einer Mehrzahl von zusätzlichen Datenein- und Ausgangselementen (9', 9", ..., 9^{N}) bestehen, die an externe Automatisierungsvorrichtungen angeschlossen sind (11', 11", ..., 11^{N}) und mit einem Element (7) für die Sammlung und Reihenfolge der Daten, das operativ mit obigen Datenein- und Ausgangselementen (9', 9", ..., 9^{N}) verbunden ist, dieses Element (7) für die Datensammlung und Reihenfolge ist durch einen Feld-Bus (3), mit einer numerischen Kontrolle (1) für die Datenverwaltung verbunden.

## Revendications

1. Système à connexion optique pour l'échange de données entre dispositifs pour l'automation industrielle, comprenant une pluralité d'éléments de connexion (7, 9', 9", ..., 9^{N}), **caractérisé en ce que** chacun desdits éléments de connexion (7, 9', 9", ..., 9^{N}) est pourvu d'au moins deux paires de moyens optiques de transmission (30, 32) et de réception (28, 34), chaque paire étant composée d'un moyen optique de transmission (30, 32) placé sur un côté principal (10) de chacun desdits éléments de connexion (7, 9', 9", ..., 9^{N}) et d'un moyen optique de réception (28, 34) placé sur un côté principal (12), à l'opposé de chacun desdits éléments de connexion (7, 9', 9", ..., 9^{N}), chaque paire de moyens optiques de transmission (30, 32) et réception (28, 34) étant en outre placée sur lesdits côtés principaux (10, 12) desdits éléments de connexion (7, 9', 9", ..., 9^{N}) de façon opposée à la paire précédente de manière à placer sur chacun des côtés principaux (10, 12) desdits éléments de connexion (7, 9', 9", ..., 9^{N}) un moyen de transmission (30, 32) auquel suit un moyen de réception (28, 34) auquel suit, en mode optionnel, un moyen de transmission (30, 32) et ainsi de suite, chacun desdits moyens de transmission (30, 32) et de réception (28, 34) étant capable de coopérer pour l'échange de données avec un respectif moyen de réception (28, 34) et de transmission (30, 32) d'un autre élément de connexion adjacent aux éléments de connexion (7, 9', 9", ..., 9^{N}).

2. Système à connexion optique selon la Revendication 1, **caractérisé en ce que** au moins un desdits éléments de connexion (7, 9', 9", ..., 9^{N}) est pourvu sur un côté mineur (14) perpendiculaire aux côtés (10, 12) sur lesquels sont placés les moyens de transmission (30, 32) et de réception (28, 34), d'au moins une autre paire de moyens de transmission (30, 32) et de réception (28, 34).

3. Système à connexion optique selon la Revendication 1, **caractérisé en ce que** lesdits éléments de connexion (7, 9', 9", ..., 9^{N}) sont installés à l'intérieur de respectifs coffrets (13) pour automation industrielle, chacun desdits coffrets étant pourvu d'orifices (16, 18, 20, 22) pratiqués en correspondance desdits moyens de transmission (30, 32) et de réception (28, 34) pour en permettre leurs modalités opérationnelles réciproques.

4. Système à connexion optique selon la Revendication 2, **caractérisé en ce que** lesdits éléments de connexion (7, 9', 9", ..., 9^{N}) sont installés à l'intérieur de respectifs coffrets (13) pour automation industrielle, chacun desdits coffrets étant pourvu d'orifices (16, 18, 20, 22) pratiqués en correspondance desdits moyens de transmission (30, 32) et de réception (28, 34) pour en permettre leurs modalités opérationnelles réciproques et d'orifices (24, 26) pratiqués en correspondance de ladite au moins autre paire de moyens de transmission (30, 32) et de réception (28, 34) pour en permettre les modalités opérationnelles.

5. Système à connexion optique selon la Revendication 1, **caractérisé en ce que** lesdits moyens optiques de transmission (30, 32) et de réception (28, 34) sont constitués d'émetteurs et de récepteurs de rayons optiques sur fréquence infrarouge.

6. Système à connexion optique selon la Revendication 5, **caractérisé en ce que** lesdits émetteurs et de récepteurs de rayons optiques sur fréquence infrarouge travaillent suivant le protocole IrDa.

7. Système à connexion optique selon la Revendication 5 ou 6, **caractérisé en ce que** chacune des paires desdits émetteurs (30, 32) et récepteurs (28, 34) est reliée à un respectif codeur/décodeur (36, 38) à son tour relié à des moyens de contrôle et de gestion (40, 42), lesdits moyens de contrôle et de gestion (40, 42) étant connectés, à travers une interface de I/O (44), à une plaque à bornes (46) pour l'alimentation et l'entrée/sortie de signaux provenant de dispositifs d'automation industrielle extérieurs.

8. Système à connexion optique selon la Revendication 7, **caractérisé en ce que** lesdits moyens de contrôle et de gestion (40, 42) sont constitués d'un élément du type UART (40) et d'un microprocesseur (42).

9. Système à connexion optique selon la Revendication 1, **caractérisé en ce que** lesdits moyens optiques de transmission (30, 32) et réception (28, 34) sont constitués d'émetteurs et de récepteurs de rayons optiques à rayons laser.

10. Système à connexion optique selon la Revendication 1, **caractérisé en ce que** lesdits moyens optiques de transmission (30, 32) et réception (28, 34) sont constitués d'émetteurs et récepteurs de rayons optiques sur fréquence à micro-ondes ou à travers la lumière visible.

11. Système à connexion optique selon la Revendication 1, **caractérisé en ce que** l'alimentation à chacun desdits éléments de connexion (7, 9', 9", ..., 9^{N}) est fournie séparément par rapport audit système à connexion optique.

12. Système à connexion optique selon la Revendication 11, **caractérisé en ce que** l'alimentation est fournie par des connexions en série à travers des câbles.

13. Système à connexion optique selon la Revendication 11, **caractérisé en ce que** l'alimentation est fournie par des plaques à bornes de connexions débranchables.

14. Système à connexion optique selon la Revendication 1, **caractérisé en ce que** lesdits éléments de connexion (7, 9', 9", ..., 9^{N}) sont constitués par une pluralité d'éléments additionnels d'entrée et de sortie des données (9', 9", ..., 9^{N}) respectivement reliés (11', 11'', ..., 11^{N}) aux dispositifs d'automation industrielle extérieurs et par un élément (7) de recueil et de mise en séquence des données relié opérationnellement aux éléments d'entrée et de sortie des données (9', 9", ..., 9^{N}), cet élément (7) de recueil et de mise en séquence des données étant connecté, à travers un bus de champ (3), à un contrôle numérique (1) pour la gestion des données.
